**Europäisches Patentamt**

**European Patent Office**

**Office européen des brevets**

(19)

(11) Numéro de publication : **0 394 138 B1**

(12) **FASCICULE DE BREVET EUROPEEN**

(45) Date de publication du fascicule du brevet :
**22.06.94 Bulletin 94/25**

(51) Int. Cl.$^5$ : **G03H 1/06,** G01C 11/02, G03B 37/00

(21) Numéro de dépôt : **90401074.1**

(22) Date de dépôt : **20.04.90**

(54) **Procédé et dispositif holographique en lumière incohérente permettant l'étude du relief terrestre.**

(30) Priorité : **21.04.89 FR 8905345**

(43) Date de publication de la demande :
**24.10.90 Bulletin 90/43**

(45) Mention de la délivrance du brevet :
**22.06.94 Bulletin 94/25**

(84) Etats contractants désignés :
**DE GB**

(56) Documents cités :
**US-A- 3 514 177**
**US-A- 4 602 844**
**OPTICS COMMUNICATIONS, vol. 65, no. 4, 15 février 1988, pages 243-249, Elsevier Science Publishers B.V., Amsterdam, NL; G.Y. SIRAT et al.: "Conoscopic holograms"**

(56) Documents cités :
**JOURNAL OF THE OPTICAL SOCIETY OF AMERICA, vol. 58, no. 5, mai 1968, pages 625-628; O. BRYNGDAHL et al.:**
"**One-dimensional holography with spatially incoherent light**"
**JOURNAL OF THE OPTICAL SOCIETY OF AMERICA, vol. 55, no. 11, novembre 1965, pages 1555,1556; A.W. LOHMANN:**
"**Wavefront reconstruction for incoherent objects**"

(73) Titulaire : **FRANCE TELECOM**
**6, Place d'Alleray**
**F-75015 Paris (FR)**

(72) Inventeur : **Sirat, Gabriel**
**5 rue Leredde**
**F-75013 Paris (FR)**
Inventeur : **Maître, Henri**
**147 rue de Bercy**
**F-75012 Paris (FR)**

(74) Mandataire : **Martin, Jean-Jacques et al**
**Cabinet REGIMBEAU**
**26, Avenue Kléber**
**F-75116 Paris (FR)**

## Description

La présente invention concerne le domaine de l'holographie.

Elle concerne plus précisément le domaine de l'holographie obtenue en lumière incohérente, et dénommée généralement "holographie conoscopique" par les spécialistes.

Un dispositif permettant d'obtenir une holographie conoscopique en lumière incohérente est décrit dans le document US-A-4 602 844. Le dispositif décrit dans ce document comprend comme illustré schématiquement sur la figure 1 annexée, un cristal biréfringent inséré entre deux polariseurs circulaires et un élément photosensible formant support d'enregistrement.

Selon le document US-A-4 602 844 l'axe du cristal est parallèle à l'axe géométrique du système, soit perpendiculaire au support d'enregistrement.

Ce cristal décompose un rayon incident en, d'une part, un rayon ordinaire, affecté d'un indice de réfraction $n_o$, d'autre part, un rayon extraordinaire, affecté d'un indice de réfraction variable en fonction de l'angle d'incidence $\theta$, soit $n_e(\theta)$ cet indice de réfraction variable.

Ces deux rayons se propagent à des vitesses différentes à l'intérieur du cristal. De ce fait, ils en sortent déphasés. L'holographie conoscopique se base sur le fait que ce déphasage est fonction de l'angle d'incidence $\theta$. Les deux rayons interfèrent sur le support d'enregistrement (film photographique, CCD...) après avoir traversé le polarisateur de sortie, de sorte que l'intensité du rayon résultant est fonction également de l'angle $\theta$. Autrement dit, contrairement à l'holographie classique, chaque rayon incident produit son propre rayon de référence. L'ensemble des rayons situés sur un cône d'axe parallèle à l'axe optique du cristal et d'angle ouverture $\theta$ donnera la même intensité sur le plan d'observation.

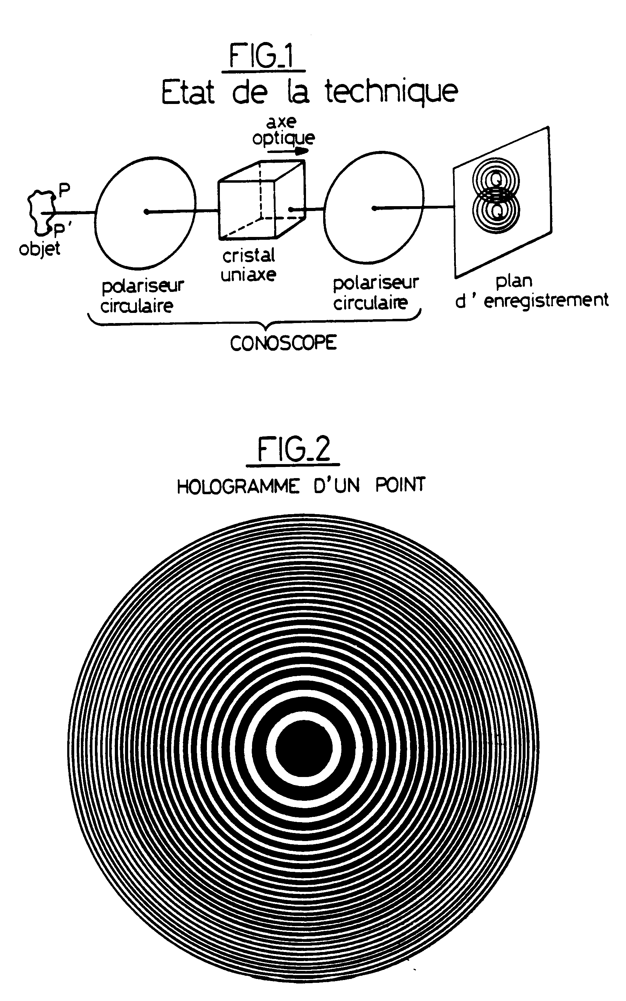

L'hologramme conoscopique d'un point obtenu à l'aide du dispositif précité correspond, comme illustré sur la figure 2 annexée, à un réseau zoné, c'est-à-dire à une série de franges annulaires et concentriques d'interférence.

L'hologramme conoscopique d'un objet est la superposition des hologrammes de chacun des points composant l'objet. Les figures 3b et 3c du document US-A-4 602 844 précité montrent respectivement l'hologramme de 2 et 3 points d'un objet plan.

L'hologramme résultant contient toute l'information utile, de sorte qu'il est possible de reconstruire en trois dimensions l'objet initial.

Le système conoscopique réalise une transformation linéaire entre l'objet et son hologramme.

La réponse percussionnelle du système, qui caractérise la transformation linéaire, s'écrit :

$$(1) \qquad T(x', y') = 1 + \cos(\alpha r^2),$$

où $r^2 = x'^2 + y'^2$, et :

$$(2) \qquad \alpha = 2\pi L \frac{\Delta n}{\lambda n_0^2 Z_c^2},$$

avec

$\lambda$ : longueur d'onde de la source,

$L$ : longueur de cristal,

$n_0$ : indice ordinaire du cristal,

$\Delta n$ : valeur absolue de la différence entre les indices ordinaire et extraordinaire,

$x, y, z$ : coordonnées dans le volume objet,

$x', y'$ : coordonnées dans le plan de l'hologramme,

$$(3) \qquad Z_c \simeq Z(x, y) - L + \frac{L}{n_0},$$

où $Z(x, y)$ est la distance entre le plan holographique et le point objet considéré, situé à la position latérale $(x, y)$. La paramètre de Fresnel $\alpha$ s'écrit encore :

$$(4) \qquad \alpha = \frac{\pi}{\lambda_{eq}(Z_c)Z_c},$$

définissant ainsi une longueur d'onde équivalente $\lambda_{eq}$ :

$$(5) \qquad \lambda_{eq} = \lambda n_0^2 \frac{Z_c}{\Delta n \, 2L},$$

ou encore :

$$(6) \qquad \alpha = \frac{\pi}{\lambda f_c},$$

définissant ainsi la distance focale $f_c$ de la lentille de Fresnel :

$$f_c \;=\; n_0^2 \frac{Z_c^2}{\Delta n\,2L}. \quad (7)$$

Dans le cas où l'objet considéré est plan ($\alpha$ = constante) la longueur d'onde équivalente et la focale $f_c$ sont des constantes du système.

La relation (4) montre alors que l'hologramme conoscopique d'un point enregistré à la longueur d'onde $\lambda$ est similaire à l'hologramme de ce même point enregistré en lumière cohérente (holographie de Gabor) à la longueur d'onde équivalente $\lambda_{eq}$ ; notons que l'hologramme conoscopique mesure des intensités et non des amplitudes.

Les distances $Z_c$ et $L$ étant du même ordre de grandeur et $\Delta n$ étant de l'ordre de O,1, la longueur d'onde $\lambda_{eq}$ est supérieure à la longueur d'onde réelle d'enregistrement $\lambda$ ; typiquement $\lambda_{eq}$ = 3 à 100µm.

Il s'en suit que la résolution latérale dans l'hologramme (proportionnelle à la longueur d'onde $\lambda$) est plus faible en holographie conoscopique qu'en holographie classique ; elle est de l'ordre de quelques dizaines de micromètres.

Comme indiqué précédemment, l'hologramme enregistré avec un dispositif conoscopique contient toute l'information utile.

Par exemple pour l'hologramme d'un point correspondant à un réseau zoné :

- le centre de la zone et le point objet sont sur la même droite, parallèle à l'axe optique, et si le point objet est translaté, transversalement ou latéralement, l'hologramme se translate indentiquement dans le plan holographique. Les coordonnées du centre $C(x_o, y_0)$ de la zone de Fresnel sont donc égales, aux deux premières coordonnées du point $P(x_o, y_o, z_o)$ holographié.
- l'intensité de l'hologramme donne l'énergie lumineuse dans le cône d'ouverture de lumière.
- l'espacement des franges fournit la distance de l'objet au plan d'observation, indépendamment de la position du dispositif conoscopique. On peut en effet écrire :

$$(8) \qquad Z_c \;=\; R^2/F\lambda_{eq}$$

et

$$(9) \qquad Z(x,y) \;=\; Z_c + L - L/n_0 \;=\; R^2/F\lambda_{eq} + L - L/n_0$$

avec R le rayon de la zone de Fresnel et F le nombre de franges claires et sombres sur ce rayon.

Malgré les grands espoirs fondés sur l'holographie conoscopique précitée, celle-ci n'a pas connu jusqu'ici de développements industriels.

Cela semble du au fait que l'hologramme ainsi obtenu s'avère en fait assez difficile à exploiter.

La présente invention a maintenant pour but de proposer des moyens permettant une exploitation plus simple de l'hologramme.

Ce but est atteint selon l'invention, grâce à un dispositif holographique pour enregistrer un hologramme d'un objet, ledit dispositif comprenant :

- un support ;
- un élément photosensible pour enregistrer l'hologramme ;
- un système conoscopique inséré sur le trajet des rayons lumineux entre l'objet et ledit élément photosensible, ledit système comportant un cristal biréfringent inséré entre deux polariseurs ;
  ledit dispositif étant caractérisé par des moyens optiques insérés sur le trajet des rayons lumineux, les moyens optiques étant tels que le système conoscopique ne collecte que des rayons parallèles ou quasi parallèles à un plan passant par l'axe optique du système conoscopique, et par
  des moyens d'échantillonage adaptés pour échantillonner séquentiellement le signal obtenu en sortie de l'élément photosensible.

Un but auxiliaire de la présente invention est de permettre l'étude d'une surface importante de l'objet étudié, par exemple de la surface terrestre.

Pour cela selon une caractéristique avantageuse de la présente invention, le support sur lequel sont placés l'élément photosensible et le système conoscopique est soumis à un déplacement relatif par rapport à l'objet à étudier dans une direction parallèle à un plan moyen de l'objet et perpendiculaire au plan des rayons qui passent par le système conoscopique.

La présente invention concerne également un procédé d'enregistrement d'un hologramme d'un objet utilisant un dispositif holographiquedu type précité, le procédé comprenant l'étape suivante :

- l'échantillonnage séquentiel de l'information disponible en sortie de l'élément photosensible.

Selon une autre caractéristique avantageuse de la présente invention, le système conoscopique comprend une série d'ensembles conoscopiques juxtaposés, disposée sous forme d'une barette rectiligne s'étendant transversalement à la direction de déplacement relatif.

D'autres caractéristiques, buts et avantages de la présente invention apparaîtront à la lecture de la description détaillée qui va suivre et en regard des dessins annexés, donnés à titre d'exemples non limitatifs et sur lesquels, les figures 1 et 2 annexées qui illustrent l'état de la technique ayant déjà été décrites :

- la figure 3 représente une vue schématique d'un système conforme à la présente invention,
- la figure 4 représente schématiquement les différents composants d'un ensemble photodétecteur conoscopique conforme à la présente invention,
- la figure 5 représente schématiquement quatre éléments photodétecteurs constituant un ensemble photodétecteur conoscopique conforme à la présente invention, et
- les figures 6 et 7 représentent deux vues schématiques orthogonales entre elles, respectivement selon des plans de coupe YZ et XZ des moyens optiques utilisés selon la présente invention.

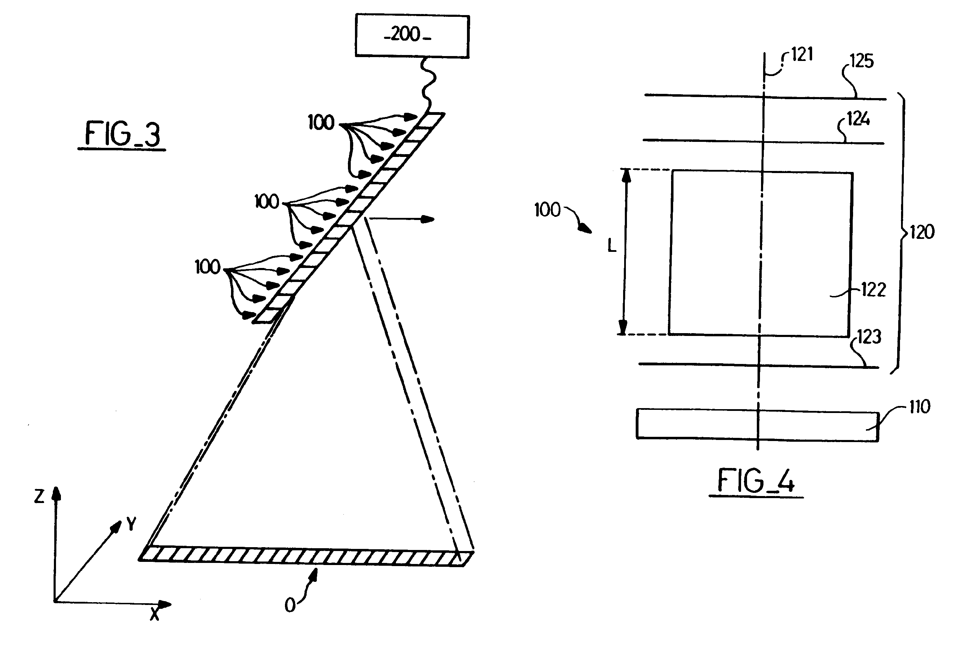

On a représenté schématiquement sur les figures 3 et 4 annexées un ensemble photodétecteur conoscopique 100 comprenant des moyens optiques 110 et un élément conoscopique 120, pour étudier un objet O (la surface terrestre par exemple). Cet objet est supposé, avoir son plan moyen parallèle au plan défini par les axes X et Y.

L'ensemble photodétecteur conoscopique 100 est placé sur un mobile, par exemple un satellite ou un aéronef, qui se déplace parallèlement à l'axe X à une vitesse v.

L'élément conoscopique 120 a son axe optique 121 parallèle à l'axe des Z (qui est orthogonal aux axes X et Y).

L'élément conoscopique 120 comprend un cristal biréfringent 122 placé entre un polarisateur circulaire 123 et un analyseur 124, suivi d'un photodétecteur 125 tel qu'un photodétecteur CCD. Le cristal 122 a son axe optique parallèle à l'axe Z. Son indice de réfraction est no, sa biréfringence $\Delta n$ et sa longueur L.

Les moyens optiques 100 sont unidimensionnels (par exemple cylindriques). Ils donnent une image dans une dimension. En d'autres termes les moyens optiques 110 sont conçus de telle sorte que seule la lumière parallèle ou quasi parallèle au plan X-Z est collectée par l'élément conoscopique.

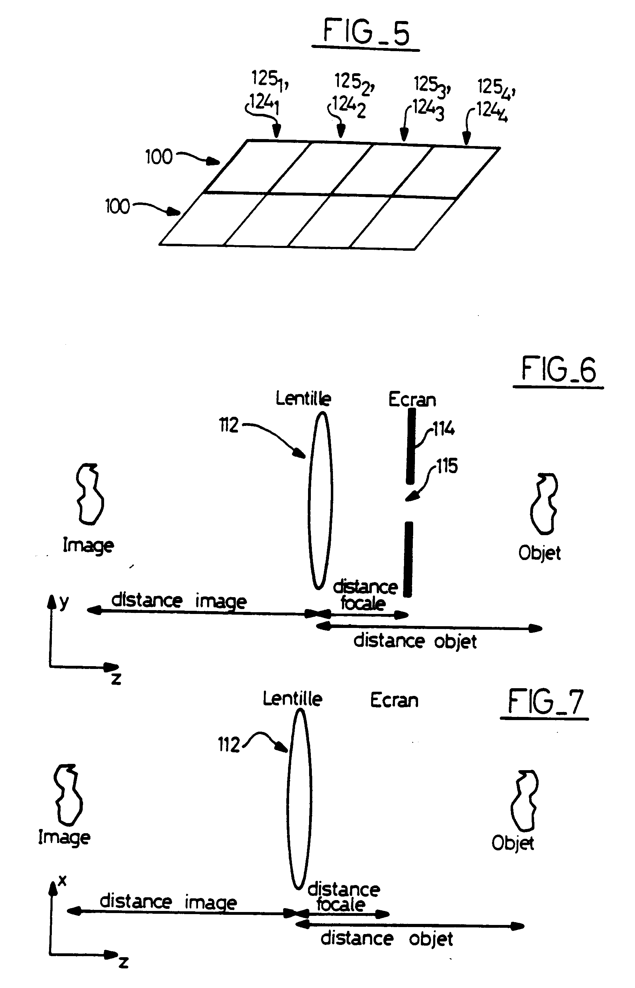

Selon la représentation schématique donnée sur les figures 6 et 7, les moyens optiques 110 comportent une optique normale 112, bi-dimensionnelle, et un écran 114 possédant une ouverture 115, dans le plan de FOURIER objet limitant l'ouverture du système aux rayons parallèles ou quasi-parallèles au plan X-Z. L'illustration des figures 6 et 7 ne représente qu'un schéma de principe. De nombreuses structures optiques connues sont susceptibles de remplir la fonction recherchée. De préférence, les moyens optiques 110 sont conçus pour compenser l'aberration chromatique du système conoscopique 120. Ils pourront comprendre un filtre interférentiel afin de sélectionner une bande particulière de longueur d'onde. De plus, de préférence, un télescope de faible grossissement, permettant d'augmenter l'angle d'attaque du rayon lumineux est incorporé au système optique 110.

Ainsi l'élément conoscopique 100 collecte la lumière diffusée par une bande de terrain de largeur dy et de longueur X=Ndx, dy et dx sont les résolutions latérales du système ; N le nombre de pixels et T=dx/v est le temps de passage sur un pixel.

Il en résulte qu'un rayon de lumière (longueur d'onde $\lambda$, intensité Io) provenant de l'objet O et se propageant dans le plan X-Z ou sensiblement dans celui-ci (en faisant un angle $\theta$ par rapport à l'axe Z et un angel $\phi$, petit, par rapport au plan X-Z) est polarisé par le premier polariseur circulaire 123 avant d'atteindre le cristal 122.

Ce rayon incident est décomposé par le cristal 122 en un rayon ordinaire et un rayon extraordinaire. ces deux rayons sortent déphasés du cristal et atteignent le photodétecteur 125 après avoir traversé l'analyseur de sortie 124.

Ainsi, ces deux rayons interfèrent sur le photodétecteur 125, de sorte que l'intensité du rayon résultant est fonction de l'angle d'incidence $\theta$.

Cependant, l'information ainsi obtenue sur le photo-détecteur 125 englobe en fait deux informations parasites qui correspondent respectivement au fond continu cohérent et à une image conjuguée (voir par exemple la demande de brevet en France déposée le 27 décembre 1988 sous le numéro 88 17225). Ces deux informations parasites brouillent l'information de base suffisante pour reconstruire l'objet.

Pour cette raison, il est prévu selon l'invention des moyens permettant d'enregistrer différents hologrammes conoscopiques de l'objet selon différentes (4 de préférence) configurations de polarisations respectives et de combiner les différents hologrammes conoscopiques ainsi obtenus pour éliminer le fond continu et l'image conjuguée.

Les quatre configurations de polarisation requises sont les suivantes :

(i) analyseur circulaire 124 de même direction que le polariseur 123,

(ii) analyseur circulaire 124 de direction opposée au polariseur 123,

(iii) analyseur 124 linéaire dont l'axe est à 45° dans le plan X-Y,

(iv) analyseur 124 linéaire dont l'axe est à -45° dans le plan X-Y.

Pour cela de préférence, comme schématisé sur la figure 5, l'analyseur de sortie 124 est formé d'une matrice de 4 éléments $124_1$, $124_2$, $124_3$, $124_4$ correspondant respectivement aux polarisations requises et la photodétecteur 125 est formé d'une matrice de 4 éléments $125_1$, $125_2$, $125_3$, $125_4$ respectivement superposés aux éléments d'analyseur précités.

L'intensité correspondant à un même point objet obtenue sur chacun des quatre éléments de photodétecteurs $125_1$, $125_2$, $125_3$, $125_4$, sera

$$(10) \qquad I_{1,2,3,4} = T_{1,2,3,4}\, I_0$$

avec :

$$(11a) \qquad T_1 = \cos^2(\Delta\phi)$$
$$(11b) \qquad T_2 = \sin^2(\Delta\phi)$$
$$(11c) \qquad T_3 = 1 + \sin(2\Delta\phi)$$
$$(11d) \qquad T_4 = 1 - \sin(2\Delta\phi)$$

respectivement pour les quatre éléments, lorsque

$$(12) \qquad \Delta\phi = \frac{2\pi\Delta nL}{\lambda n_0}\theta^2 = a\theta^2$$

et :

$$(13) \qquad a = \frac{2\pi\,\Delta n\,L}{\lambda n_0^2}$$

où a est la constante de Fresnel, différente du paramètre de Fresnel $\alpha$ définit précédemment

$$(\,\alpha\,\frac{a}{Z_c^2}$$

Des moyens de traitement associés aux quatre éléments (qui sont représentés schématiquement sous la référence 200 sur la figure 3) combinent les réponses ainsi obtenues sur ces éléments selon la fonction de transfert suivante :

$$(14) \qquad T = (T_1 - T_2) + j(T_3 - T_4).$$

L'information ainsi obtenue est épurée du fond continue et de l'image conjuguée.

Elle peut s'écrire, pour un point objet d'intensité $I_m$, positionné à $x_m = mdx$ et à une hauteur $z_m$ par rapport à une référence du système sous la forme :

$$(15) \qquad S(t) = I_m\exp(j[a(x_m - vt)/z_m)^2)]$$

a représente la constante de Fresnel définie par la relation (13).

Le signal est échantillonné à une fréquence f = 1/T = v/dx de sorte que l'on peut écrire, en fonction du temps discrétisé par pas de T, l'index courant étant la variable $n_i$, la variable X étant discrétisé par pas $d_x$, l'index courant étant m.

$$(16) \qquad S_n = S(nT) = I_m\exp(j[a_0(m - n)^2/(z_m/z_0)^2])$$

avec $a_0$ la constante de Fresnel normalisée donnée par

$$(17) \qquad a_0 = \frac{a\,d_x^2}{z_0^2} = \frac{2\pi\,\Delta n\,L\,d_x^2}{\lambda\,n_0^2\,z_0^2}$$

avec $\Delta n$ et $n_0$ la biréfringence et l'indice de réfraction ordinaire du cristal 122, L sa longueur, $\lambda$ la longueur d'onde de la lumière, et $z_0$ la hauteur moyenne du mobile par rapport à l'objet étudié. Si la variation de hauteur $\Delta Z_m = Z_m - z_0$ est petite par rapport à la hauteur moyenne, (ce qui est toujours le cas par exemple d'un satellite), l'équation (16) se réécrit :

$$(18) \qquad S_n = I_m\,\exp\{j[a_0\,(m - n)^2]\} + jI_m\beta_m\,(m - n)^2\exp\{j[a_0\,(m - n)^2]\} + O(\beta)$$

avec $\beta_m$ la hauteur normalisée donnée par :

$$(19) \qquad \beta_m = \frac{2a_0\,\Delta z_m}{z_0}$$

et 0 des termes d'ordres supérieurs négligeables. Le système est linéaire. Pour un ensemble comprenant N points on obtient :

$$(20) \qquad S_n = \sum_{m=n-N/2}^{m=n+N/2} I_m\,\exp\{\,j\,[a_0\,(m-n)^2]\} + jI_m\beta_m\,(m-n)^2\,\exp\{j[\,a_0\,(m-n)^2]\} + O(\beta)$$

Il suffit de déduire $I_m$ et $\beta_m$ de l'équation (20) pour obtenir à la fois l'intensité $I_m$ et la hauteur par rapport à la référence, du point $x_m$.

Différentes voies mettant par exemple en oeuvre des algorithmes mathématiques permettent de décorréler les deux termes et de trouver $I_m$ et $\beta_m$.

La plus simple, correspond à reconvoluer le signal $S_n$ avec la fonction $\exp(j[- a_0(m - n)^2])$ ; le formalisme mathématique est simplifié de beaucoup par le passage à des variables continues ; l'équation (20) s'écrit

alors :

$$(21) \qquad S(x) = I(x) * * \exp(a_0 x^2) + j\,I(x)\,\beta(x) * * x^2 \exp(a_0 x^2)$$

avec ** représentant la convolution. En recorrélant on obtient

$$(22) \qquad T(x) = S(x) * * \exp\{-a_0 x^2\} = I(x) * * \exp\{a_0 x^2\} + jI(x)\beta(x) * * x^2 \exp\{a_0 x^2\} * * \exp\{-a_0 x^2\}$$
$$= I(x) + jI(x)\,\beta(x)H_2(x)$$

$H_2$ étant la fonction d'Hermite d'ordre 2. Ces traitements sont effectués par les moyens 200.

D'une façon générale, on notera qu'à chaque moment on colationne l'information d'une bande de terrain représentée par N cellules de pas $d_x$ et par la juxtaposition de cette information sur n points de temps (avec n2N) on pourra discriminer l'information de chacune des N cellules.

Plus précisément encore, selon l'invention, il est prévu comme schématisé sur la figure 3, non pas un seul ensemble photodétecteur conoscopique 100, mais une série d'ensembles 100 juxtaposés disposée sous forme d'une barette rectilgne s'étendant parallèlement à l'axe Y.

Ainsi les différents ensembles 100, identiques entre eux et répondant à la définition donnée précédemment collectent respectivement la lumière diffusée par des bandes parallèles et juxtaposées de terrain de largeur dy et de longueur X = Ndx.

Le traitement des informations collectées par les différents ensembles 100 permet de reconstituer le relief de l'objet étudié par exemple du relief terrestre, et de représenter celui-ci, sous forme d'un modèle numérique de terrain, c'est-à-dire une matrice de nombre faisant correspondre à chaque pixel une valeur proportionnelle à la hauteur de ce point par rapport à la référence.

Pour l'analyse d'un objet très éloigné, tel que le relief terrestre, un télescope doit être incorporé aux moyens optiques.

On notera que le système conforme à la présente invention est passif en ce sens qu'il exploite les radiations diffusées par l'objet étudié - la terre par exemple - et non pas une source embarquée.

On va maintenant donner un exemple non limitatif des performances d'un système conforme à la présente invention, destiné à être embarqué dans un mobile, tel qu'une navette spatiale se déplaçant à une vitesse v de l'ordre de 8000 m/s et à une altitude moyenne $z_0$ de l'ordre de 250 km.

Pour une résolution au sol dx x dy de l'ordre de 10mx10m et pour un détecteur CCD de 4 x 1024 pixels, le temps de passage (T) sera 1,25 ms et la fréquence de trame sera 0,8KHz. On rappelle que les fréquences typiques d'un CCD sont de l'ordre de 10MHz et que les temps de calcul d'une FFT unidimensionnelle de 1024 points complexes, par processeur spécialisé peut être de l'ordre de la milliseconde. Le traitement temps réel embarqué est donc possible.

Pour une résolution de N points le déphasage maximum est égale à $\pi$ N/4 ; la longueur du cristal de calcite (biréfringence, $\Delta$n= 0,17, indice de réfraction, $n_0$ 1,42) lorsque le système optique incorpore un petit télescope 1:5 est de 64 mm pour une longueur d'onde bleue.

La résolution longitudinale peut être de l'ordre de 32 niveaux de résolution sur une plage de 500m soit approximativement 15m.

La présente invention permet d'étudier par exemple le relief terrestre. A ce titre, elle peut intéresser la recherche agronomique, mais également les domaines de la prospection pétrolière et minière, de l'étude de l'environnement et de l'équipement des territoires.

La présente invention permet d'obtenir les informations utiles pour reconstituer l'objet (informations d'intensité et de hauteur par rapport à la référence) en un seul passage. C'est là un avantage très important par rapport à des systèmes connus qui requièrent deux passages avec une observation de la scène sous deux angles différents puis une reconstruction de l'altitude par triangulation. Ces dispositifs connus à deux passages présentent de nombreux inconvénients couverts sont le nom de diachronie : les images n'étant pas prises simultanément, d'importantes différences d'aspect apparaissent entre les deux images, compromettant le calcul de l'altitude ; modifications de l'éclairage, du couvert végétal, de la hauteur des mers et des lacs, apparition de neiges, mofidication dues aux activités humaines (plantations, mines à ciel ouvert, fumées, etc...).

Bien entendu la présente invention n'est pas limitée au mode de réalisation particulier qui vient d'être décrit mais s'étend à toutes variantes conformes à son esprit.

Au lieu d'une série de photodétecteurs disposés sous forme d'une barrette s'étendant parallèlement à l'axe Y, on peut utiliser une matrice de photodétecteurs.

Il est donc intéressant de sommer les informations issues de photodétecteurs observant la même zone de terrain (soit de photodétecteurs situés sensiblement selon une ligne parallèle au déplacement).

On peut également utiliser des photodétecteurs situés à des altitudes différentes d'écart connu pour améliorer la fiabilité des informations.

Dans la description qui précède, on a évoqué le déplacement du système conoscopique devant un objet fixe à examiner. On peut inversement déplacer l'objet à examiner devant le système conoscopique lorsque les dimensions de l'objet le permettent.

Dans la description qui précède, on a évoqué pour éliminer le fond continu et l'image conjuguée la possibilité d'enregistrer simultanément quatre hologrammes correspondant à 4 configurations de polarisation à l'aide d'une matrice de quatre éléments polariseurs.

On peut aussi utiliser des moyens de polarisation susceptibles de rotation, comme enseigné dans la demande de brevet français déposée le 27 décembre 1988 sous le N° 88 17225 pour enregistrer successivement les différents hologrammes requis.

On peut encore éliminer l'image conjuguée en utilisant les dispositions décrites dans une demande de brevet déposée le même jour que la présente demande et consistant essentiellement à insérer un limiteur d'angle d'ouverture sur le trajet des rayons lumineux, avant ou après le cristal biréfringent, en disposant soit le cristal biréfringent, soit le limiteur d'ouverture, hors de l'axe. C'est-à-dire que l'on peut soit utiliser un limiteur d'angle d'ouverture situé hors de l'axe optique du dispositif, le cristal biréfringent étant placé sur l'axe optique du dispositif, soit utiliser un limiteur d'angle d'ouverture centré sur l'axe optique du dispositif, tandis que le cristal biréfringent a son axe incliné par rapport à l'axe optique du dispositif.

Le fond continu est dans ce cas éliminé par soustraction d'hologrammes.

## Revendications

1. Dispositif holographique pour enregistrer un hologramme d'un objet, ledit dispositif comprenant :
   - un support ;
   - un élément photosensible (125) pour enregistrer l'hologramme ;
   - un système conoscopique (120) inséré sur le trajet des rayons lumineux entre l'objet et ledit élément photosensible, ledit système comportant un cristal biréfringent (122) inséré entre deux polariseurs (123, 124) ;
   
   ledit dispositif étant caractérisé par des moyens optiques insérés sur le trajet des rayons lumineux, les moyens optiques étant tels que le système conoscopique ne collecte que des rayons parallèles ou quasi parallèles à un plan passant par l'axe optique (Z) du système conoscopique, et par des moyens d'échantillonage adaptés pour échantillonner séquentiellement le signal obtenu en sortie de l'élément photosensible.

2. Dispositif holographique selon la revendication 1, caractérisé par le fait que le support sur lequel sont placés l'élément photosensible (125) et le système conoscopique (120) est soumis à un déplacement relatif par rapport à l'objet à étudier dans une direction parallèle à un plan moyen de l'objet et perpendiculaire au plan des rayons qui passent par le système conoscopique.

3. Dispositif holographique selon la revendication 2, caractérisé par le fait que la fréquence f d'échantillonnage est de l'ordre de v/dx ou v représente la vitesse relative entre le système conoscopique et l'objet étudié, et dx représente la résolution souhaitée dans la direction de déplacement relatif.

4. Dispositif holographique selon l'une des revendications 1 à 3, caractérisé par le fait que le système conoscopique (120) comprend une série d'ensembles conoscopiques juxtaposés disposée sous forme d'une barette rectiligne, de sorte que le différents ensembles conoscopiques observent respectivement des bandes parallèles et juxtaposées de l'objet.

5. Dispositif holographique selon la revendication 4 prise en combinaison avec la revendication 2, caractérisé par le fait que la barette s'étend transversalement à la direction de déplacement relatif (X) qui elle-même est parallèle au plan d'ouverture (XZ) des moyens optiques.

6. Dispositif holographique selon l'une des revendications 1 à 5, caractérisé par le fait qu'il comprend des moyens de traitement aptes à
   - reconvoluer le signal obtenu en sortie du système conoscopique (120) avec la fonction $\exp(j[-a_0(m - n)^2])$, puis
   - recorréler le signal ainsi obtenu, avec la fonction $\exp(-a_0 x^2)$ avec

$$a_0 = \frac{2\pi\,\Delta n\,L\,d_x^2}{\lambda\,n_0^2\,z_0^2}$$

$\Delta n$ = biréfringence du cristal (122),

$n_0$ = indice de réfraction ordinaire du cristal (122),

L       = longueur du cristal,

dx      = résolution souhaitée,

λ       = longueur d'onde de la lumière,

$z_0$      = hauteur moyenne du mobile portant le système conoscopique.

7. Dispositif holographique selon l'une des revendications 1 à 6, caractérisé par le fait qu'il comprend des moyens permettant d'enregistrer différents hologrammes conoscopiques de l'objet selon différentes configurations de polarisations respectives et de combiner les différents hologrammes conoscopiques ainsi obtenus pour éliminer le fond continu et l'image conjuguée.

8. Dispositif holographique selon la revendication 7, caractérisé par le fait que chaque ensemble conoscopique comprend :

- un polariseur de sortie (124) formé d'une matrice de 4 éléments ($124_1$, $124_2$, $124_3$, $124_4$) correspondant respectivement aux polarisations suivantes :

a) analyseur de sortie de même direction que le polariseur d'entrée,

b) analyseur de sortie de direction opposée au polariseur d'entrée,

c) analyseur linéaire dont l'axe est à 45° dans le plan X-Y,

d) analyseur linéaire dont l'axe est de -45° dans le plan X-Y, et

- un photodétecteur (125) formé d'une matrice de 4 éléments ($125_1$, $125_2$, $125_3$, $125_4$) respectivement superposés aux éléments d'analyseur pour présenter des fonctions de transfert respectivement ($T_1$, $T_2$, $T_3$, $T_4$) et par le fait qu'il est prévu des moyens de traitement aptes à combiner les réponses ainsi obtenues sur les éléments du photodétecteur selon la fonction de transfert :

$$T = (T_1 - T_2) + j(T_3 - T_4),$$

pour éliminer le fond continu et l'image conjuguée.

9. Dispositif holographique selon l'une des revendications 1 à 7, caractérisé par le fait que les moyens optiques comprennent un télescope.

10. Dispositif holographique selon l'une des revendications 1 à 9, caractérisé par le fait que le système conoscopique (120) comprend une série d'ensembles conoscopiques juxtaposés sous forme d'une matrice.

11. Dispositif holographique selon l'une des revendications 1 à 10, caractérisé par le fait qu'il comprend des ensembles conoscopiques placés à des altitudes différentes, d'écart connu, par rapport à un objet à examiner.

12. Dispositif holographique selon l'une des revendications 1 à 11, caractérisé par le fait que, d'une part, il comprend en outre un limiter d'angle d'ouverture (10 ; 40) inséré sur le trajet des rayons lumineux et que, d'autre part, soit le cristal biréfringent (21), soit le limiteur d'angle d'ouverture (10 ; 40) est disposé hors de l'axe optique (O-O) du dispositif.

13. Dispositif selon la revendication 12, caractérisé par le fait que que le limiteur d'angle d'ouverture (10 ; 40) est situé hors de l'axe optique du dispositif et que le cristal biréfringent (21) est placé sur l'axe optique du dispositif.

14. Dispositif selon la revendication 12, caractérisé par le fait que le limiteur d'angle d'ouverture (10 ; 40) est centré sur l'axe optique (O-O) du dispositif, tandis que le cristal biréfringent (21) a son axe (C-C) incliné par rapport à l'axe optique (O-O) du dispositif.

15. Procédé d'enregistrement d'un hologramme d'un objet utilisant un dispositif holographique selon l'une des revendications 1 à 14, le procédé comprenant l'étape suivante :

- l'échantillonnage séquentiel de l'information disponible en sortie de l'élément photosensible (125).

16. Procédé selon la revendication 15, caractérisé par le fait qu'il comprend en outre l'étape consistant à :

- assurer un déplacement relatif entre le système conoscopique (120) et l'objet à étudier, dans une direction (X) parallèle au plan moyen de l'objet à étudier, et perpendiculaire au plan des rayons qui passent par le système conoscopique.

17. Procédé selon la revendication 16, caractérisé par le fait que la fréquence d'échantillonnage est de l'ordre de v/dx ou v représente la vitesse relative entre le système conoscopique et l'objet étudié de dx représente la résolution souhaitée dans la direction de déplacement relatif.

18. Procédé selon l'une des revendications 16 ou 17, caractérisé par le fait que la direction (X) de déplacement relatif entre le système conoscopique (120) et l'objet à étudier est parallèle au plan d'ouverture (XZ) des moyens optiques (110).

19. Procédé selon l'une des revendications 16 à 18, caractérisé par le fait que le système conoscopique (120) comprend une série d'ensembles conoscopiques juxtaposés disposée sous forme d'une barette rectiligne, de sorte que les différents ensembles conoscopiques observent respectivement des bandes parallèles et juxtaposées de l'objet.

20. Procédé selon la revendication 19 prise en combinaison avec la revendication 16, caractérisé par le fait que la barette s'étend transversalement à la direction de déplacement relatif (X).

21. Procédé selon l'une des revendications 15 à 20, caractérisé par le fait qu'il comprend les étapes consistant à :
    - reconvoluer le signal obtenu en sortie du système conoscopique (120) avec la fonction $\exp(j[-a_0(m - n)^2])$, puis
    - recorréler le signal ainsi obtenu, avec la fonction $\exp(-a_0 x^2)$ avec

$$a_0 = \frac{2\pi \, \Delta n \, L \, d_x^2}{\lambda \, n_0^2 \, z_0^{\,2}}$$

$\Delta n$      = biréfringence du cristal (122),
$n_0$      = indice de réfraction ordinaire du cristal (122),
$L$      = longueur du cristal,
$dx$      = résolution souhaitée,
$\lambda$      = longueur d'onde de la lumière,
$z_n$      = hauteur moyenne du mobile portant le système conoscopique.

## Patentansprüche

1. Holographische Vorrichtung zum Aufnehmen eines Hologramms eines Objekts erreicht, wobei die Vorrichtung umfaßt:
   - eine Halterung;
   - ein lichtempfindliches Element (125) zur Aufnahme des Hologramms;
   - ein konoskopisches System (120), das auf dem Weg der Lichtstrahlen zwischen dem Objekt und dem lichtempfindlichen Element angeordnet ist, wobei das System einen zwischen zwei Polarisatoren (123, 124) eingesetzten, doppelbrechenden Kristall (122) umfaßt;
        wobei die Vorrichtung gekennzeichnet ist durch optische Mittel, die auf dem Weg der Lichtstrahlen angeordnet sind, wobei die optischen Mittel solcher Art sind, daß das konoskopische System nur zu einer Ebene, die durch die optische Achse des konoskopischen Systems geht, parallele oder quasiparallele Strahlen sammelt, und durch
        Abtastmittel, die geeignet sind, sequentiell das am Ausgang des lichtempfindlichen Elements erhaltene Signal abzutasten.

2. Holographische Vorrichtung nach Anspruch 1, gekennzeichnet durch die Tatsache, daß die Halterung, auf der das lichtempfindliche Element (125) und das konoskopische System (120) angeordnet sind, einer Bewegung bezüglich des zu untersuchenden Objekts in einer Richtung parallel zu einer mittleren Ebene des Objekts und senkrecht zur Ebene der Strahlen, die durch das konoskopische System gehen, unterworfen wird.

3. Holographische Vorrichtung nach Anspruch 2, gekennzeichnet durch die Tatsache, daß die Frequenz f der Abtastung von der Größenordnung v/dx ist, wobei v die Relativgeschwindigkeit zwischen dem konoskopischen System und dem untersuchten Objekt und dx die gewünschte Auflösung in der relativen Bewegungsrichtung darstellen.

4. Holographische Vorrichtung nach einem der Ansprüche 1 bis 3, gekennzeichnet durch die Tatsache, daß das konoskopische System (120) eine Reihe von nebeneinander angeordneten, konoskopischen Anordnungen umfaßt, die in der Form eines geradlinigen Stegs angeordnet ist, so daß die verschiedenen konoskopischen Anordnungen jeweils parallele und nebeneinander liegenden Bänder des Objekts beobachten.

5. Holographische Vorrichtung nach Anspruch 4 in Verbindung mit Anspruch 2, gekennzeichnet durch die Tatsache, daß der Steg sich transversal zur relativen Bewegungsrichtung (X) erstreckt, die sich ihrerseits parallel zur Öffnungsebene (XZ) der optischen Mittel erstreckt.

6. Holographische Vorrichtung nach einem der Ansprüche 1 bis 5, gekennzeichnet durch die Tatsache, daß sie Bearbeitungsvorrichtungen umfaßt, die geeignet sind,
   - das am Ausgang des konoskopischen Systems (120) erhaltene Signal mit der Funktion $\exp(j[-a_0(m - n)^2])$ zurückzufalten und dann
   - das so erhaltene Signal mit der Funktion $\exp(-a_0 x^2)$ zurückzukorrelieren, wobei

$$a_0 = \frac{2\pi\Delta nLd_x^2}{\lambda n_0^2 z_0^2}$$

$\Delta n$ = Doppelbrechung des Kristalls (122),
$n_0$ = ordentlicher Brechungsindex des Kristalls (122),
L = Länge des Kristalls,
dx = gewünschte Auflösung,
$\lambda$ = Wellenlänge des Lichts,
$z_0$ = mittlere Höhe des beweglichen Geräts, das das konoskopische System trägt.

7. Holographische Vorrichtung nach einem der Ansprüche 1 bis 6, gekennzeichnet durch die Tatsache, daß sie Vorrichtungen umfaßt, die ermöglichen, verschiedene konoskopische Hologramme des Objekts entsprechend verschiedenen, jeweiligen Polarisationskonfigurationen aufzunehmen und die so erhaltenen, verschiedenen konoskopischen Hologramme zu kombinieren, um den kontinuierlichen Hintergrund und das konjugierte Bild zu eliminieren.

8. Holographische Vorrichtung nach Anspruch 7, gekennzeichnet durch die Tatsache, daß jede konoskopische Anordnung umfaßt:
   - einen Ausgangsanalysator (124) aus einer Matrix von 4 Elementen ($124_1$, $124_2$, $124_3$ und $124_4$), die den folgenden Polarisationen entsprechen:
   a) Ausgangsanalysator mit derselben Richtung wie der Eingangspolarisator,
   b) Ausgangsanalysator mit einer dem Eingangspolarisator entgegengesetzten Richtung,
   c) linearer Analysator, dessen Achse mit 45° in der X-Y-Ebene liegt,
   d) linearer Analysator 124, dessen Achse mit -45° in der X-Y-Ebene liegt, und
   einen Photodetektor (125), der aus einer Matrix von 4 Elementen ($125_1$, $125_2$, $125_3$ und $125_4$) hergestellt ist, die jeweils den Analysatorelementen überlagert sind, um jeweils Transferfunktionen ($T_1$, $T_2$, $T_3$, $T_4$) zu bilden, und durch die Tatsache, daß Bearbeitungsvorrichtungen vorgesehen sind, die geeignet sind, die so auf den Elementen des Photodetektors erhaltenen Antworten entsprechend der Transferfunktion $T = (T_1 - T_2) + j(T_3 - T_4)$ zu kombinieren, um den kontinuierlichen Hintergrund und das konjugierte Bild zu eliminieren.

9. Holographische Vorrichtung nach einem der Ansprüche 1 bis 7, gekennzeichnet durch die Tatsache, daß die optischen Mittel ein Teleskop umfassen.

10. Holographische Vorrichtung nach einem der Ansprüche 1 bis 9, gekennzeichnet durch die Tatsache, daß das konoskopische System (120) eine Reihe von nebeneinander, in der Form einer Matrix angeordneten konoskopischen Anordnungen umfaßt.

11. Holographische Vorrichtung nach einem der Ansprüche 1 bis 10, gekennzeichnet durch die Tatsache, daß sie konoskopische Anordnungen umfaßt, die auf verschiedenen Höhen mit bekanntem Abstand bezüglich des zu untersuchenden Objekts angeordnet sind.

12. Holographische Vorrichtung nach einem der Ansprüche 1 bis 11, einerseits gekennzeichnet durch die Tatsache, daß sie außerdem eine Öffnungswinkelbegrenzung (10; 40) umfaßt, die im Lichtstrahlengang eingesetzt ist, und andererseits durch die Tatsache, daß entweder der doppelbrechende Kristall (21) oder die Öffnungswinkelbegrenzung (10; 40) außerhalb der optischen Achse (O-O) der Vorrichtung angeordnet ist.

**13.** Holographische Vorrichtung nach Anspruch 12, gekennzeichnet durch die Tatsache, daß die Öffnungswinkelbegrenzung (10; 40) sich außerhalb der optischen Achse der Vorrichtung befindet und daß sich der doppelbrechende Kristall (21) auf der optischen Achse der Vorrichtung befindet.

**14.** Holographische Vorrichtung nach Anspruch 12, gekennzeichnet durch die Tatsache, daß die Öffnungswinkelbegrenzung (10; 40) auf der optischen Achse (O-O) der Vorrichtung zentriert ist, während der dop-pelbrechende Kristall (21) seine Achse (C-C) bezüglich der optischen Achse (O-O) der Vorrichtung geneigt hat.

**15.** Verfahren zum Aufnehmen eines Hologramms eines Objekts unter Verwendung einer holographischen Vorrichtung nach einem der Ansprüche 1 bis 14, wobei das Verfahren den folgenden Verfahrensschritt umfaßt:
   - das sequentielle Abtasten der am Ausgang des lichtempfindlichen Elements (125) verfügbaren Information.

**16.** Verfahren nach Anspruch 15, gekennzeichnet durch die Tatsache, daß es außerdem den Verfahrensschritt umfaßt, der darin besteht:
   - eine Relativbewegung zwischen dem konoskopischen System (120) und dem zu untersuchenden Objekt in einer Richtung (X) parallel zur mittleren Ebene des zu untersuchenden Objekts und senkrecht zur Ebene der Strahlen, die durch das konoskopische System gehen, zu sichern.

**17.** Verfahren nach Anspruch 16, gekennzeichnet durch die Tatsache, daß die Frequenz der Abtastung von der Größenordnung v/dx ist, wobei v die Relativgeschwindigkeit zwischen dem konoskopischen System und dem untersuchten Objekt und dx die gewünschte Auflösung in der relativen Bewegungsrichtung darstellen.

**18.** Verfahren nach einem der Ansprüche 16 bis 17, gekennzeichnet durch die Tatsache, daß sich die relative Bewegungsrichtung (X) zwischen dem konoskopischen System (120) und dem zu untersuchenden Objekt parallel zur Öffnungsebene (XZ) der optischen Mittel (110) erstreckt.

**19.** Verfahren nach einem der Ansprüche 16 bis 18, gekennzeichnet durch die Tatsache, daß das konoskopische System (120) eine Reihe von nebeneinander angeordneten, konoskopischen Anordnungen umfaßt, die in der Form eines geradlinigen Stegs angeordnet ist, so daß die verschiedenen konoskopischen Anordnungen jeweils parallele und nebeneinander liegenden Bänder des Objekts beobachten.

**20.** Verfahren nach Anspruch 19 in Verbindung mit Anspruch 16, gekennzeichnet durch die Tatsache, daß sich der Steg transversal zur relativen Bewegungsrichtung (X) erstreckt.

**21.** Verfahren nach einem der Ansprüche 15 bis 20, gekennzeichnet durch die Tatsache, daß es die Verfahrensschritte umfaßt, die darin bestehen:
   - das am Ausgang des konoskopischen Systems (120) erhaltene Signal mit der Funktion $\exp(j[-a_0(m - n)^2])$ zurückzufalten und dann
   - das so erhaltene Signal mit der Funktion $\exp(-a_0 x^2)$ zurückzukorrelieren, wobei

$$a_0 = \frac{2\pi\Delta n L d_x^2}{\lambda n_0{}^2 z_0{}^2}$$

   $\Delta n$ = Doppelbrechung des Kristalls (122),
   $n_0$ = ordentlicher Brechungsindex des Kristalls (122),
   L = Länge des Kristalls,
   dx = gewünschte Auflösung,
   $\lambda$ = Wellenlänge des Lichts,
   $z_0$ = mittlere Höhe des beweglichen Geräts, das das konoskopische System trägt.

**Claims**

**1.** Holographic apparatus for recording a hologram of an object, said apparatus comprising:

- a support;
- a photosensitive element (125) for recording the hologram;
- a conoscopic system (120) inserted on the path of the light rays between the object and said photosensitive element, said system comprising a birefringent crystal (122) inserted between two polarizers (123, 124);

said apparatus being characterized by optical means on the path of the light rays, the optical means being such that the conoscopic system only collects rays that are parallel or quasi-parallel to a plane including the optical axis (Z) of the conoscopic system, and by sampling means adapted for sequentially sampling the signal obtained at the outlet from the photosensitive element.

2. Holographic apparatus according to claim 1,
characterized by the fact that the support, on which the photosensitive element (125) and the conoscopic system (120) are placed, is subjected to relative displacement with respect to the object under investigation along a direction parallel to the mean plane of the object and perpendicular to the plane of rays which includes the conoscopic system.

3. Holographic apparatus according to claim 2,
characterized by the fact that the sampling frequency $\underline{f}$ is about v/dx where $\underline{v}$ represents the relative speed between the conoscopic system and the object under investigation, and dx represents the resolution desired in the direction of relative displacement.

4. Holographic apparatus according to any one of claims 1 to 3, characterized by the fact that the conoscopic system (120) includes a series of juxtaposed conoscopic assemblies disposed in the form of a rectilinear strip in such a manner that the various different conoscopic assemblies observe respective juxtaposed parallel strips of the object.

5. Holographic apparatus according to claim 4, read in combination with claim 2, characterized by the fact that the strip of assemblies extends transversely to the direction (X) of relative displacement which is itself parallel to the aperture plane (XZ) of the one-dimensional optical means.

6. Holographic apparatus according to any one of claims 1 to 5, characterized by the fact that it includes processor means suitable for:

reconvoluting the signal obtained at the outlet from the conoscopic system (120) with the function $\exp(j[-a_o(m-n)^2])$, and then

recorrelating the signal obtained in this way with the function $\exp(-a_o x^2)$ with

$a_o = (2\pi\Delta n L d_x^2)/\lambda n_o^2 z_o^2$ where

$\Delta n$ = the birefringence of the crystal (122);

$n_o$ = the ordinary refractive index of the crystal (122);

L = the length of the crystal;

dx = the desired resolution;

$\lambda$ = the wavelength of the light; and

$z_o$ = the mean altitude of the vehicle carrying the conoscopic system.

7. Holographic apparatus according to any one of claims 1 to 6, characterized by the fact that it includes means for recording various different conoscopic holograms of the object using respective different polarization configurations, and for combining the various conoscopic holograms obtained in this way in order to eliminate the bias and the conjugate image.

8. Holographic apparatus according to claim 7, characterized by the fact that each conoscopic assembly comprises:

an outlet polarizer (124) in the form of a four-element matrix ($124_1$, $124_2$, $124_3$, and $124_4$) corresponding respectively to the following polarizations:

a) an outlet analyzer in the same direction as the inlet polarizer;

b) an outlet analyzer in the opposite direction to the inlet polarizer;

c) a linear analyzer whose axis is at 45° in the X-Y plane; and

d) a linear analyser whose axis is at -45° in the X-Y plane; and

a photodetector (125) the form of a four-element matrix ($125_1$, $125_2$, $125_3$, and $125_4$) the elements being respectively superposed over the elements of the analyser in order to present respective transfer functions ($T_1$, $T_2$, $T_3$, and $T_4$) and by the fact that processor means are provided suitable for combining the responses obtained in this way from the photodetector elements using the following transfer function:

$$T = (T_1 - T_2) + j(T_3 - T_4)$$

in order to eliminate the bias and the conjugate image.

9. Holographic apparatus according to any one of claims 1 to 7, characterized by the fact that the optical means include a telescope.

10. Holographic apparatus according to any one of claims 1 to 9, characterized by the fact that the conoscopic system (120) includes a series of conoscopic assemblies juxtaposed in the form of a matrix.

11. Holographic apparatus according to any one of claims 1 to 10, characterized by the fact that it includes conoscopic assemblies placed at different altitudes relative to an object under examination, with the altitude difference(s) being known.

12. Holographic apparatus according to any one of claims 1 to 11, characterized by the fact that firstly it includes an aperture angle limiter (10; 40) inserted on the path of the light rays, and secondly that either the birefringent crystal (21) or the aperture angle limiter (10; 40) is disposed off the optical axis (O-O) of the apparatus.

13. Apparatus according to claim 12, characterized by the fact that the aperture angle limiter (10; 40) is situated off the optical axis of the apparatus and the birefringent crystal (21) is placed on the optical axis of the apparatus.

14. Apparatus according to claim 12, characterized by the fact that the aperture angle limiter (10: 40) is centered on the optical axis (O-O) of the apparatus, whereas the birefringent crystal (21) has its axis (C-C) inclined relative to the optical axis (O-O) of the apparatus.

15. A method of recording a hologram of an object using holographic apparatus according to any one of claims 1 to 14, the method including the following step:
- sequential sampling of the information available at the outlet from the photosensitive element (125).

16. A method according to claim 15, characterized by the fact that it further includes the step consisting in:
providing relative displacement between the conoscopic system (120) and the object under investigation, along a direction (X) parallel to the mean plane of the object under investigation; and perpendicular to the plane of rays including the conoscopic system.

17. A method according to claim 16, characterized by the fact that sampling frequency is about v/dx where $\underline{v}$ represents the relative speed between the conoscopic system and the object under examination and dx represents the resolution desired in the direction of relative displacement.

18. A method according to claim 16 or 17, characterized by the fact that the direction (X) of relative displacement between the conoscopic system (120) and the object under investigation lies parallel to the aperture plane (XZ) of the optical means (110).

19. A method according to any one of claims 16 to 18, characterized by the fact that the conoscopic system (120) includes a series of juxtaposed conoscopic assemblies disposed in the form of a rectilinear strip such that the various different conoscopic assemblies observe respective parallel and juxtaposed strips of the object.

20. A method according to claim 19 read in combination with claim 16, characterized by the fact that the strip extends transversely to the direction (X) of relative displacement.

21. A method according to any one of claims 15 to 20, characterized by the fact that it includes the steps consisting in:
reconvoluting the signal obtained at the outlet from the conoscopic system (120) with the function $\exp(j[-a_o(m-n)^2])$, and then
recorrelating the signal obtained in this way with the function $\exp(-a_o x^2)$ with

$$a_o = (2\pi\Delta n L d_x^2)/(\lambda n_o^2 z_o^2$$

where

13

$\Delta n$ = the birefringence of the crystal (122);

$n_o$ = the ordinary refractive index of the crystal (122);

L = the length of the crystal;

dx = the desired resolution;

$\lambda$ = the wavelength of the light; and

$z_o$ = the mean altitude of the vehicle carrying the conoscopic system.

# FIG.1
## Etat de la technique

axe
optique

P
objet
P'

polariseur
circulaire

cristal
uniaxe

polariseur
circulaire

plan
d'enregistrement

CONOSCOPE

# FIG.2
## HOLOGRAMME D'UN POINT

FIG_3

FIG_4

EP 0 394 138 B1

## FIG_5

## FIG_6

## FIG_7